# DEMANDE DE BREVET EUROPEEN

(11) **EP 2 775 056 A1**
(43) Date de publication de la demande: **10.09.2014**
(21) Numéro de dépôt: 14157383.2
(22) Date de dépôt: 28.02.2014
(51) Int. Cl.: E04B 2/22, E04B 2/24, E04C 1/41, B28B 1/50, B28B 7/28, B28B 11/24, B28B 19/00, E04C 3/02, E04B 2/02

(54) **Bloc de construction hybride structural/isolant**

(30) Priorité: 04.03.2013 FR 1351910
(71) Demandeur: Solumix, 87410 Le Palais-Sur-Vienne (FR)
(72) Inventeur: Merienne, Jean, 75012 PARIS (FR); Gaignon, Richard, 91770 Saint-Vrain (FR); Chaput, Christophe, 87410 Le Palais sur vienne (FR)
(74) Mandataire: Cabinet Chaillot

(57) **Abrégé**

Bloc de construction, caractérisé par le fait qu'il se compose d'une partie isolante constituée par un bloc parallélépipédique présentant deux faces opposées supérieure et inférieure et quatre faces latérales opposées deux à deux, et fait de matière inorganique solide thermiquement isolante appelé « bloc isolant » (7) et d'une partie structurale constituée par au moins un bloc de matériau structural appelé « bloc structural » (8) solidaire dudit bloc isolant, le ou au moins un bloc structural étant rapporté contre une face latérale dudit bloc isolant, au moins une face latérale dudit bloc isolant perpendiculaire à celle portant le ou un bloc structural étant laissée libre, la liaison entre le matériau structural et la matière inorganique solide s'effectuant par adhésion dudit matériau et de ladite matière.

## Description

La présente invention concerne le domaine des matériaux de construction et notamment des matériaux de construction d'isolation thermique.

Le domaine de la construction doit aujourd'hui répondre à des normes environnementales de plus en plus exigeantes. Les réglementations thermiques, régulièrement renforcées, fixent des limites strictes à la consommation énergétique des bâtiments neufs. Ces normes imposent donc d'utiliser des solutions d'isolation efficaces.

Les matériaux de construction classiques, tels que briques, parpaings ou bloc bétons sont certes simples d'utilisation et résistants mais présentent une conductivité thermique élevée, qui nuit à l'isolation du bâtiment.

Il est donc habituel d'incorporer des matériaux isolants lors de la construction d'un bâtiment.

Parmi les matériaux fréquemment utilisés en isolation thermique, on compte des matériaux organiques isolants tels que des résines synthétiques et matières plastiques du type mousses de polystyrène, résopal, phénoplastes et mousses de polyuréthane ou d'autres isolants organiques tels que la laine de bois, la laine de mouton ou des produits végétaux tels que le chanvre. On utilise également des matières inorganiques telles que la laine de verre.

Ces matériaux font généralement partie de la structure du mur. Ils sont par exemple insérés entre le mur proprement dit, fait de briques ou de blocs de béton, et un élément de paroi interne tel qu'une plaque de plâtre. La construction du mur nécessite donc la pose successive de plusieurs couches de matériaux de construction différents, ce qui se révèle préjudiciable en termes de temps passé à la construction et de simplicité de la construction. Certains de ces matériaux peuvent également se révéler inflammables, ou toxiques lors de leur manipulation, en libérant par exemple des poussières/particules toxiques.

Des matériaux de construction « tout-en-un », c'est-à-dire intégrant des matériaux isolants ont été proposés afin de faciliter la construction de parois de bâtiments énergétiquement efficaces. Ainsi, le brevet suisse CH598442 et le brevet américain US4584043 proposent des blocs de construction constitués de deux briques ou blocs de béton extérieurs, enchâssant un panneau de matériau isolant, tel que du polystyrène expansé. Cependant, le matériau isolant utilisé, de faible résistance mécanique, ne peut être utilisé que sous forme de plaques relativement minces. Seules les deux briques ou blocs bétons assurent alors un rôle porteur. Le matériau isolant utilisé dans ces blocs se révèle également facilement inflammable. Les blocs divulgués dans ces brevets peuvent également se révéler relativement lourds et donc difficiles à manipuler, puisqu'ils intègrent deux éléments porteurs tels que brique ou bloc de béton.

Enfin, les blocs décrits dans les brevets cités ci-dessus nécessitent toujours l'ajout d'un panneau supplémentaire, par exemple une plaque de plâtre, en paroi interne du mur construit, pour donner un aspect visuellement agréable à la paroi interne du mur, ce qui est nécessaire lors d'une utilisation dans le domaine de l'habitat.

La présente invention a donc pour but de proposer un bloc de construction qui soit à la fois facile d'utilisation, c'est-à-dire de conception « tout-en-un » et prêt à l'emploi, ne nécessitant pas l'ajout d'une couche d'isolant ou d'un élément de paroi interne de bâtiment. Le bloc de construction recherché combine donc de bonnes propriétés d'isolation thermique et acoustique, une résistance mécanique élevée et un aspect extérieur compatible avec l'utilisation d'une de ses parois comme paroi interne de bâtiment.

La Société déposante a également recherché à intégrer à la solution proposée les possibilités d'aménager les murs ainsi construits pour le passage de canalisations électriques ou hydrauliques, de réaliser, si le besoin existe, des constructions répondant aux normes sismiques, et d'assurer une isolation maîtrisée, sans ponts thermiques.

A cet effet, la présente invention concerne un bloc de construction, caractérisé par le fait qu'il se compose d'une partie isolante constituée par un bloc parallélépipédique présentant deux faces opposées supérieure et inférieure et quatre faces latérales opposées deux à deux, et fait de matière inorganique solide thermiquement isolante appelé « bloc isolant » et d'une partie structurale constituée par au moins un bloc de matériau structural appelé « bloc structural » solidaire dudit bloc isolant, le ou au moins un bloc structural étant rapporté contre une face latérale dudit bloc isolant, au moins une face latérale dudit bloc isolant perpendiculaire à celle portant le ou un bloc structural étant laissée libre, la liaison entre le matériau structural et la matière inorganique solide s'effectuant par adhésion dudit matériau et de ladite matière.

On entend par « bloc structural » un bloc qui est apte à reprendre la charge dans la construction réalisée avec les blocs selon l'invention. La largeur des blocs structuraux est calculée de façon bien connue des constructeurs pour répondre aux normes applicables selon la destination de la construction, par exemple pour répondre aux normes applicables aux logements individuels et collectifs si la construction est un immeuble d'habitation.

Cette reprise de charge s'effectue par l'intermédiaire des colles utilisées pour assembler les niveaux successifs de blocs de construction lors de la construction des murs.

Ainsi, le bloc de construction selon la Figure 14 de la demande de brevet français déposée le 18/05/2012 sous le numéro 1254271 ayant pour titre « Bloc de construction isolant » ne répond pas aux exigences de la présente invention.

La matière inorganique solide thermiquement isolante remplit avantageusement au moins l'une des conditions suivantes :
- elle est poreuse ; la porosité est un moyen efficace d'obtenir une performance élevée d'isolation, à coût faible, puisque l'on utilise les propriétés isolantes de l'air. Elle présente notamment une porosité comprise entre 55 à 95 % en volume, de préférence entre 65 et 85 % en volume ;
- elle présente une résistance mécanique à la compression comprise entre 5 et 30 kg/cm², de préférence supérieure à 8 kg/cm², de façon particulièrement préférée supérieure à 12 kg/cm², de la façon que l'on préfère le plus supérieure à 20 kg/cm² ; et
- elle présente une conductivité thermique à 25°C inférieure à 130 mW/K.m, de préférence inférieure à 80 mW/K.m.

La résistance mécanique est mesurée en prélevant un cube de 100x100x100 mm³ dans un bloc de matière inorganique solide thermiquement isolante. On applique une force sur la face supérieure du cube, tout en maintenant la face inférieure du cube contre une plaque métallique horizontale. La résistance mécanique de la matière inorganique solide thermiquement isolante est la pression exercée (en kg/cm² ou MPa) à partir de laquelle le cube de matière commence à se fissurer.

La matière inorganique thermiquement isolante peut être de type silico-calcaire ou comporter une ou plusieurs phases silico-calcaires. Elle peut notamment comporter une phase cristalline contenant une ou plusieurs silico-calcaires de formule CaₓSi_{y}O_{z}(OH)ᵢ, jH₂O_{,} où x, y, z, i et j sont des nombres entiers positifs ou nuls, en particulier de formule Ca₆Si₆O₁₇(OH)₂.

La ou les phases silico-calcaires peuvent notamment être choisies parmi la xonotlite et la tobermorite.

D'une façon générale, l'utilisation de ces blocs de matière inorganique solide thermiquement isolante présente les avantages suivants :
- une résistance mécanique élevée ;
- des propriétés d'isolation thermique élevées ;
- une stabilité dans le temps ;
- des propriétés cohésives lui permettant d'adhérer aux blocs briques sans l'utilisation de colle ou d'un autre agent d'adhésion ;
- une bonne résistance au feu ;
- des propriétés d'isolation acoustique élevées ;
- de coût économique faible ;
- une innocuité appropriée à une utilisation comme paroi de bâtiment, notamment une faible émission de particules, et/ou une faible toxicité pour les êtres humains et pour l'environnement ;
- un procédé de fabrication et une utilisation simples et adaptables aux lignes de production de briques, notamment en terre cuite ou en béton ou bois naturel ou reconstitué ;
- une aptitude au recyclage en fin de vie, avec une possibilité de mise en décharge ordinaire, sans caractéristiques spécifiques.

La liaison entre la matière inorganique et le matériau structural se fait par adhésion de ladite matière et dudit matériau. Cette adhésion se crée lors de la fabrication du bloc de construction, par coulage de la matière inorganique sous forme fluide dans un moule aux dimensions du bloc de construction, contenant le bloc porteur, suivi par une solidification par traitement hydrothermal de la matière inorganique. Ce procédé de fabrication est décrit à titre d'exemple non limitatif, d'autres procédés pouvant être envisagés par l'homme du métier. L'adhésion est due aux propriétés cohésives du matériau inorganique solide thermiquement isolant, et ne nécessite pas l'utilisation de colle ou d'un autre agent d'adhésion. Ceci permet d'éviter l'utilisation d'une substance de forte conductivité thermique, qui créerait un pont thermique au sein du bloc de construction.

Dans un bloc de construction selon l'invention, destiné à constituer un bloc de mur ou d'angle, le bloc isolant peut être un bloc plein.

Dans un bloc de construction selon l'invention, destiné à constituer un bloc de mur ou d'angle, le bloc isolant peut comporter au moins un trou le traversant de la face supérieure à la face inférieure, lesdits trous, lorsqu'ils sont plusieurs, pouvant être de sections identiques ou différentes, le ou au moins un trou pouvant avoir une dimension permettant le passage d'au moins une canalisation électrique et/ou d'au moins une canalisation hydraulique ou le passage d'un ferraillage destiné à être noyé dans le béton, avantageusement pratiqué dans la région d'angle d'un bloc d'angle, la partie ajourée d'un bloc isolant pouvant représenter jusqu'à 85% du volume dudit bloc isolant.

Les trous pratiqués dans le bloc isolant ont pour but de diminuer la valeur lambda de conductivité thermique par exemple de 0,09/0,06 W/K.m à 0,06/0,04 W/K.m ainsi que de faciliter le séchage du bloc isolant lors de sa fabrication, laquelle sera décrite plus en détail ci-après.

Dans une construction en mode non sismique et sismique, les blocs d'angle comportent des trous de passage de ferraillage, et dans le mode sismique, et dans le mode sismique, les blocs de mur comporteront aussi des trous de ferraillage.

En cas de ferraillage, les trous des blocs isolants des différents niveaux de la construction se correspondent. Sinon, les trous des blocs isolants de différents niveaux peuvent ne pas se correspondre, ce qui est le cas lorsque l'on recherche une meilleure isolation.

L'épaisseur de la partie isolante d'un bloc de construction peut être ajustée pour répondre aux nouvelles normes RT2012 et aux futures normes 2020. On tiendra compte lors des calculs d'isolation de la présence éventuelle d'une isolation extérieure de la construction.

Dans un bloc de construction selon l'invention, destiné à constituer un bloc de mur, la partie structurale peut être constituée par le bloc rapporté contre une face latérale du bloc isolant, et le cas échéant par un autre bloc structural rapporté contre la face latérale opposée dudit bloc isolant ou noyé dans ledit bloc isolant au voisinage de la face latérale opposée de ce dernier.

Dans un bloc de construction selon l'invention, destiné à constituer un bloc de mur, le bloc isolant peut comporter, sur l'une de ses faces latérales perpendiculaires à celle(s) portant un bloc structural, au moins une rainure d'emboîtement s'étendant sur toute sa hauteur et sur la face latérale libre opposée au moins une nervure d'emboîtement s'étendant sur toute sa hauteur.

Dans un bloc de construction selon l'invention, destiné à constituer un bloc d'angle, la partie structurale peut être constituée par le bloc structural ou premier bloc, rapporté contre une face latérale du bloc isolant, par un second bloc structural rapporté contre une face latérale du bloc isolant perpendiculaire à la précédente, et le cas échéant par un troisième bloc structural rapporté contre, ou noyé dans ce dernier au voisinage de, la face latérale opposée à celle portant le premier bloc structural, le troisième bloc ne s'étendant pas jusqu'au second bloc pour permettre une continuité de la partie isolante aux angles d'une construction.

Dans un bloc de construction selon l'invention, destiné à constituer un bloc d'angle, le bloc isolant peut comporter au moins une rainure/nervure d'emboîtement s'étendant sur toute sa hauteur d'une part sur sa face latérale transversale opposée à celle formant l'angle, et d'autre part sur la partie de la face latérale longitudinale qui est opposée à celle portant le premier bloc structural et qui assure la liaison directe avec la partie isolante principale du bloc de construction de mur qui sera disposé perpendiculairement audit bloc de construction d'angle.

Un bloc de construction selon l'invention, destiné à constituer un linteau d'ouverture de porte ou fenêtre, peut présenter une longueur correspondant à l'ouverture qu'il est destiné à délimiter en partie supérieure, peut comporter un second bloc structural sur la face opposée à celle portant ledit premier bloc structural, et le bloc isolant étant évidé à sa surface supérieure, formant un canal en U débouchant dans les faces latérales transversales dudit bloc de construction linteau pour le ferraillage et la coulée de béton.

Dans un bloc de construction selon l'invention, le bloc isolant principal peut comporter, sur l'une de ses faces latérales, au moins une rainure d'emboîtement s'étendant sur toute sa hauteur et sur la face opposée au moins une nervure d'emboîtement s'étendant sur toute hauteur.

Dans un bloc de construction selon l'invention, le bloc isolant a avantageusement une résistance à la compression comprise entre 5 et 30 kg/cm² dans sa partie principale. Celle-ci est constituée par le bloc isolant lui-même si le bloc ne comporte qu'un bloc structural ou par la partie comprise entre deux blocs structuraux opposés si le bloc de construction présente deux tels blocs.

Dans un bloc de construction selon l'invention, la face supérieure du bloc isolant peut être en retrait de la face supérieure du ou des blocs structuraux afin d'éviter de déposer de la colle sur le bloc isolant lors de la réalisation de la construction.

Dans un bloc de construction selon l'invention, un bloc structural peut comporter au moins une nervure/rainure sur sa ou ses faces appliquées contre un bloc isolant et venue en prise avec une rainure/nervure correspondante pratiquée dans ledit bloc isolant à la manière d'un assemblage de type tenon-mortaise, un tel assemblage étant aussi avantageusement prévu dans le cas d'un bloc structural noyé dans le bloc isolant, de part et d'autre dudit bloc structural.

La présence de tenons-mortaises a pour but de renforcer, si besoin en était, la liaison par adhérence entre le matériau structural et la matière inorganique isolante.

Dans un bloc de construction selon l'invention, un bloc structural peut être constitué d'une brique pleine, ou d'une brique alvéolaire, notamment une brique alvéolaire à perforations verticales ou une brique alvéolaire à perforations horizontales, ou de terre cuite ou de béton banché ou d'un élément de type parpaing.

L'invention porte également sur un procédé de fabrication du bloc de construction tel que défini ci-dessus, caractérisé par le fait que, dans un autoclave résistant à la pression, on place au moins un moule dans lequel on a coulé une bouillie aqueuse de la matière inorganique solide thermiquement isolante et dans lequel on a placé verticalement le ou les blocs structuraux ainsi que le cas échéant un ou des inserts correspondant au trou ou aux trous devant être pratiqués dans le bloc isolant principal, on ferme hermétiquement l'autoclave que l'on place sous pression, on chauffe jusqu'à la température de prise hydrothermale, on ouvre l'autoclave, on retire le ou les moules et l'on démoule le ou les blocs de construction et on les sèche.

La pression est par exemple comprise entre 4 et 15 bars (entre 4.10⁵ et 15.10⁵ Pa), et la température est par exemple entre 120 et 200 °C.

Les trous pratiqués dans le bloc isolant facilitent le séchage.

L'invention porte également sur un ensemble de blocs de construction d'un ouvrage ou bâtiment comprenant des blocs de construction de mur, des blocs de construction d'angle et des blocs de construction linteaux tels que définis ci-dessus, les longueurs d'un bloc d'angle et d'un bloc de mur étant avantageusement égales et la largeur d'un bloc d'angle ou de mur étant avantageusement la moitié de sa longueur, les blocs de construction incluant des demi-blocs de mur.

L'invention porte également sur un ouvrage ou bâtiment ou partie d'ouvrage ou de bâtiment composé de blocs de construction tels que définis ci-dessus, lesdits blocs de mur et d'angle étant disposés côte à côte pour former des couches horizontales successives solidarisées par collage aux interfaces, les blocs d'une couche étant décalés en quinconce par rapport aux blocs d'une couche immédiatement supérieure ou inférieure, et les blocs d'angle d'une couche étant orientés perpendiculairement aux blocs d'angle d'une couche immédiatement supérieure ou inférieure, des blocs de construction linteaux étant disposés en partie supérieure d'ouvertures prévues dans l'ouvrage ou le bâtiment, du béton ayant été coulé dans les trous en regard comportant du ferraillage, des canalisations électriques ou hydrauliques ayant été passées dans les trous en regard prévus à cet effet, et les trous d'échange thermique étant disposés ou non en regard d'une couche immédiatement supérieure ou inférieure, les faces externes des murs pouvant recevoir un enduit, et les faces internes, un enduit ou un revêtement de bois, lambris, plâtre ou béton.

Dans le cas où la paroi intérieure de la construction présente une partie isolante, celle-ci peut être directement découpée à la disqueuse ou creusée pour le passage de canalisations. Elle sert aussi de pare-feu si un habillage interne de bois ou de brique est prévu.

On peut aussi cheviller dans l'isolant pour suspendre des objets. On pourra aussi cheviller dans l'isolant et la paroi structurale noyée dans celui-ci si la masse des objets est supérieure à 20/30 kg.

On pourra aussi enduire directement sur l'isolant extérieur ou intérieur ou sur la partie structurale.

Pour mieux illustrer l'objet de la présente invention, on va en décrire ci-après, à titre indicatif et non limitatif, plusieurs modes de réalisation particuliers avec référence au dessin annexé.

Sur ce dessin :
- la Figure 1 est une vue schématique en perspective partielle d'un bâtiment en cours de construction, montrant une région d'angle du bâtiment ainsi qu'une ouverture pratiquée dans l'un des murs, conformément à un premier mode de réalisation ;
- la Figure 2 est une vue en perspective d'un bloc de mur de la réalisation de la Figure 1 ;
- la Figure 3 est une vue de dessus du bloc de mur de la Figure 2 ;
- la Figure 4 est une vue en perspective d'un bloc d'angle de la réalisation de la Figure 1 ;
- la Figure 5 est une vue de dessus du bloc d'angle de la Figure 4 ;
- la Figure 6 est une vue en perspective d'un demi-bloc de mur de la réalisation de la Figure 1 ;
- la Figure 7 est une vue de dessus du demi-bloc de mur de la Figure 6 ;
- la Figure 8 est une vue en perspective du bloc de construction linteau de la réalisation de la Figure 1 ;
- la Figure 9 est une vue en bout du bloc de construction linteau de la Figure 8 ;
- les Figures 10, 11 et 12 sont des vues analogues aux Figures respectivement 3, 5 et 7 de blocs de construction pour la réalisation d'un bâtiment conformément à un second mode de réalisation de la présente invention ;
- les Figures 13, 14 et 15 sont des vues analogues aux Figures respectivement 3, 5 et 7 de blocs de construction pour la réalisation d'un bâtiment conformément à un troisième mode de réalisation de la présente invention ;
- les Figures 16, 17 et 18 sont des vues analogues aux Figures respectivement 3, 5 et 7 de blocs de construction pour la réalisation d'un bâtiment conformément à un quatrième mode de réalisation de la présente invention ;
- les Figures 19, 20 et 21 sont des vues analogues aux Figures respectivement 3, 5 et 7 de blocs de construction pour la réalisation d'un bâtiment conformément à un cinquième mode de réalisation de la présente invention ;
- les Figures 22 à 27 sont des vues analogues aux Figures respectivement 1, 3, 5, 7, 8 et 9 d'une région d'angle de bâtiment et des blocs de construction associés, conformément à un sixième mode de réalisation de la présente invention ;
- les Figures 28 à 31 sont des vues analogues aux Figures respectivement 1, 3, 5 et 7 d'une région d'angle de bâtiment et des blocs de construction associés, conformément à un septième mode de réalisation de la présente invention ; et
- les Figures 32 à 35 sont des vues partielles de l'intérieur de la partie d'angle de la Figure 28 montrant quatre différentes variantes de réalisation de cet intérieur.

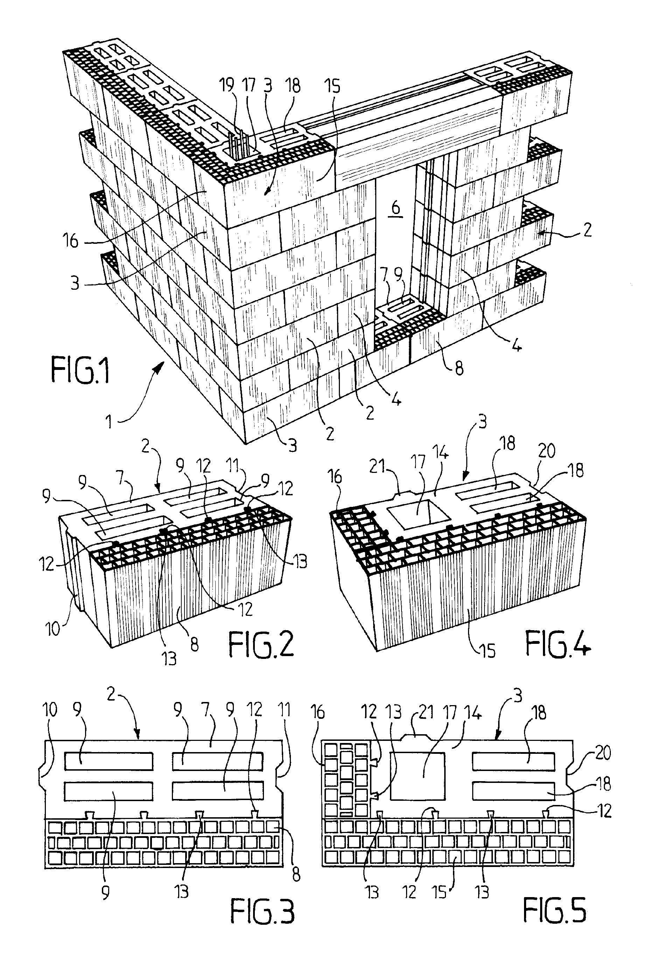

### Mode de réalisation des Figures 1 à 9

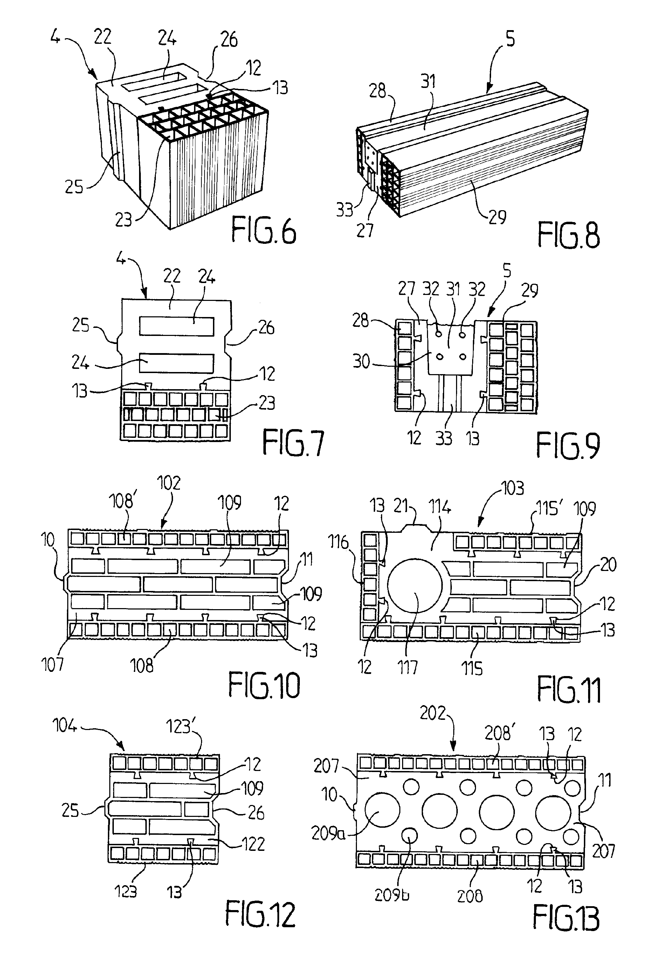

Si l'on se réfère à la Figure 1, on peut voir que l'on a représenté la partie d'angle d'un bâtiment 1 en cours de construction, réalisé à partir :
- de blocs de mur 2 (Figures 2 et 3) ;
- de blocs d'angle 3 (Figures 4 et 5) ;
- de demi-blocs de mur 4 (Figures 6 et 7) ; et
- d'un bloc linteau 5 (Figures 8 et 9) destiné à délimiter en partie supérieure une ouverture 6 du bâtiment 1.

Dans la description ci-après des blocs de construction, on se réfère à la position que ces derniers occupent dans le bâtiment en indiquant les faces supérieure et inférieure et les faces latérales longitudinales et transversales de ces blocs.

Un bloc de mur 2 est constitué par un bloc de matériau isolant (ou bloc isolant) 7 de forme générale parallélépipédique sur une face latérale longitudinale duquel est accolé un bloc brique 8 également de forme générale parallélépipédique.

Le bloc isolant 7 est traversé, de sa face supérieure à sa face inférieure, par quatre trous 9 de section en forme de rectangle allongé, régulièrement répartis en deux rangées selon la longueur du bloc 7.

Par ailleurs, le bloc isolant 7 présente une saillie 10 de section transversale trapézoïdale s'effilant vers l'extérieur, selon la ligne verticale moyenne de l'une de ses faces latérales transversales, et une rainure 11, complémentaire de la saillie 10, sur la face latérale transversale opposée.

Egalement, il présente sur la face latérale longitudinale accolée au bloc brique 8 quatre rainures verticales 12 régulièrement réparties de section trapézoïdale s'effilant vers la surface, dont le rôle est indiqué plus loin.

Le bloc brique 8 est un bloc alvéolaire à trois rangées d'alvéoles verticales. Il comporte, sur l'une de ses faces longitudinales, des nervures 13 complémentaires des rainures 12 du bloc isolant 7, permettant de consolider l'ancrage entre eux des blocs 7 et 8.

Un bloc d'angle 3 est constitué par un bloc de matériau isolant 14 de forme générale parallélépipédique sur une face latérale longitudinale duquel est disposé un bloc brique 15 et sur une face latérale transversale duquel est disposé un autre bloc brique 16, les blocs briques 15 et 16 étant réunis à l'angle du bloc 3.

Le bloc isolant 14 est traversé de sa face supérieure à sa face inférieure par un trou d'angle 17 de section carrée et par deux trous 18 de section en forme de rectangle allongé, identiques aux trous 9 du bloc 2, disposés dans la partie opposée au bloc 16. Le trou 17 sert au passage des fers à béton 19 (voir Figure 1).

Par ailleurs, le bloc isolant 14 présente, sur sa face latérale transversale opposée au bloc brique 16, une rainure 20 identique à la rainure 11, et sur sa face latérale longitudinale opposée au bloc brique 15 et dans la région d'angle, une saillie 21 identique à la saillie 10 du bloc 2.

Egalement, le bloc 14 présente, le long de ses faces latérales longitudinale et transversale accolées aux blocs respectivement 15 et 16, des rainures 12 aptes à recevoir des nervures 13 correspondantes desdits blocs 15 et 16.

Les blocs 2 et 3 ont la même longueur et la même largeur, la largeur étant la moitié de la longueur.

Le demi-bloc 4 peut être défini comme un bloc 2 que l'on aurait coupé en deux suivant un plan transversal moyen, la face latérale transversale du plan de coupe comportant une rainure 26 analogue à la rainure 11. Le bloc 4 comporte ainsi un bloc isolant 22 et un bloc brique 23, le bloc isolant 22 étant traversé par deux trous 24 et comportant la rainure 26 telle qu'indiquée ci-dessus et la nervure 25 opposée.

L'ancrage entre les deux blocs 22 et 23 est là également consolidé par l'imbrication de nervures 13 du bloc brique 23 dans des rainures 12 du bloc isolant 22.

Le bloc linteau 5 est constitué par un bloc isolant 27 ayant la forme d'un parallélépipède rectangle allongé, sur chacune des deux faces latérales longitudinales duquel sont disposées un bloc brique respectivement 28, 29, le bloc brique 29 ayant la même largeur que les blocs 8 et 15 et le bloc 28 étant moins large. La longueur du bloc linteau 5 est le double de celle des blocs 2 et 3 et sa largeur est égale à la largeur d'un bloc 2.

Le bloc isolant 27 est creusé, dans sa face supérieure pour former un canal central en U 30 s'étendant d'une face latérale transversale à l'autre du bloc 27. Ce canal est destiné à recevoir du béton 31 et armé de fers à béton 32, ce qui a été schématisé sur les Figures 8 et 9.

Le bloc 27 présente une saillie 33 analogue à la saillie 10 sur l'une de ses faces latérales transversales, et sur sa face opposée, une rainure complémentaire de la saillie 33.

Egalement le bloc isolant 27 présente le long de ses faces latérales longitudinales des rainures longitudinales 12 de même profil que les rainures 12 des blocs 2, 3 et 4 et aptes à recevoir des nervures correspondantes 13 des blocs briques 28 et 29. Ces derniers sont des blocs alvéolaires respectivement à une et à trois rangées d'alvéoles horizontales dans l'exemple représenté.

### Mode de réalisation des Figures 10 à 12

Concernant ce mode de réalisation, on a utilisé, pour désigner des éléments analogues à ceux du précédent mode de réalisation, des chiffres de référence supérieurs de 100. On a cependant conservé les mêmes chiffres de référence pour les nervures 10, 21, 25 et 13 et les rainures 11, 20, 26 et 12.

Ce même principe de notation a été utilisé pour les modes de réalisation suivants.

On a représenté uniquement un bloc de mur 102 (Figure 10), un bloc d'angle 103 (Figure 11) et un demi-bloc 104 (Figure 12) pour ce deuxième mode de réalisation qui diffère du premier par le fait que les trous 9, 18 et 24 dans les blocs isolants respectivement 107, 114 et 122 sont remplacés par des trous rectangulaires 109 formant un motif en quinconce, que le trou d'angle 17 est remplacé par un trou circulaire 117, que les blocs briques 8, 15 et 16 sont remplacés par des blocs respectivement 108, 115 et 116 ne comportant qu'une seule rangée d'alvéoles, qu'un bloc brique 108' de même type que le bloc 108 est accolé à la face latérale longitudinale opposée au bloc 108 dans le bloc 102, et qu'un bloc brique 115', de même type que le bloc 115, est accolé à la face latérale longitudinale opposée au bloc 115, excepté dans la région d'angle.

Le bloc brique opposé au bloc 23 dans le demi-bloc 104 est référencé 123'.

### Mode de réalisation des Figures 13 à 15

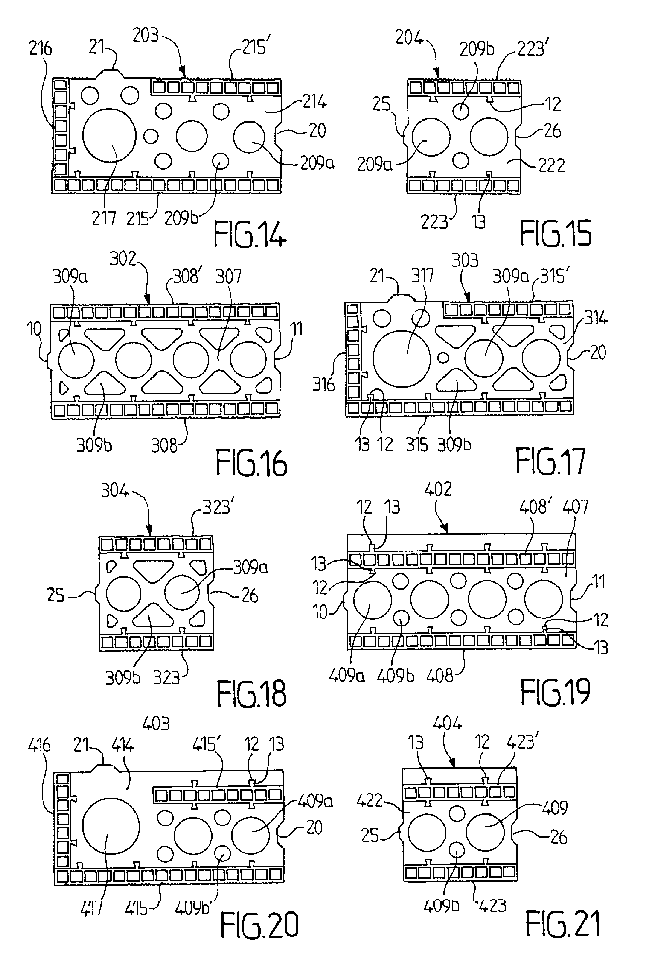

On a représenté uniquement un bloc de mur 202 (Figure 13), un bloc d'angle 203 (Figure 14) et un demi-bloc 204 (Figure 15) pour ce troisième mode de réalisation qui diffère du précédent par le fait que les trous 109 sont remplacés par des trous circulaires 209a, 209b de deux diamètres différents disposés selon un motif ayant un trou 209a de plus grand diamètre au centre et deux trous 209b de plus petit diamètre le long des bords longitudinaux, décalés en quinconce par rapport au trou de plus grand diamètre, et par le fait que le trou d'angle 117 est remplacé par un trou circulaire 217 d'un diamètre encore plus grand.

### Mode de réalisation des Figures 16 à 18

On a représenté uniquement un bloc de mur 302 (Figure 16, un bloc d'angle 303 (Figure 17) et un demi-bloc 304 (Figure 18) pour ce quatrième mode de réalisation qui diffère du troisième par le fait que les trous 209b de petit diamètre se situant au voisinage des faces latérales longitudinales des blocs 2 et 3 sont remplacés par des trous triangulaires 309b.

### Mode de réalisation des Figures 19 à 21

On a représenté uniquement un bloc de mur 402 (Figure 19), un bloc d'angle 403 (Figure 20) et un demi-bloc 404 (Figure 21) pour ce cinquième mode de réalisation qui diffère uniquement du troisième mode de réalisation par le fait que les blocs briques 408', 415' et 423' sont noyés dans les blocs isolants respectivement 407, 414 et 422. Un accrochage par rainures 12 et saillies 13 est prévu des deux côtés des blocs 408', 415' et 423'.

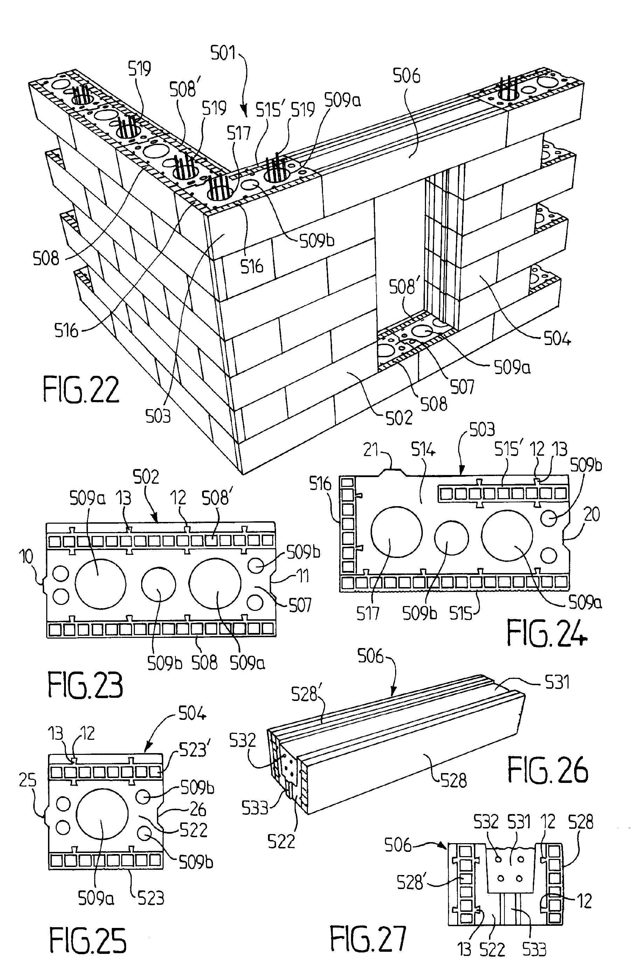

### Mode de réalisation des Figures 22 à 27

Le sixième mode de réalisation diffère du cinquième par le fait que les blocs 502 et 504 comportent des trous 509a d'un diamètre égal au trou 417 et que le bloc 503 comporte également un même trou 509a, les autres trous, d'un diamètre inférieur, étant notés 509b.

Les trous 517 et 509a peuvent recevoir des fers à béton 519, ce qui permet de construire un bâtiment répondant aux normes sismiques.

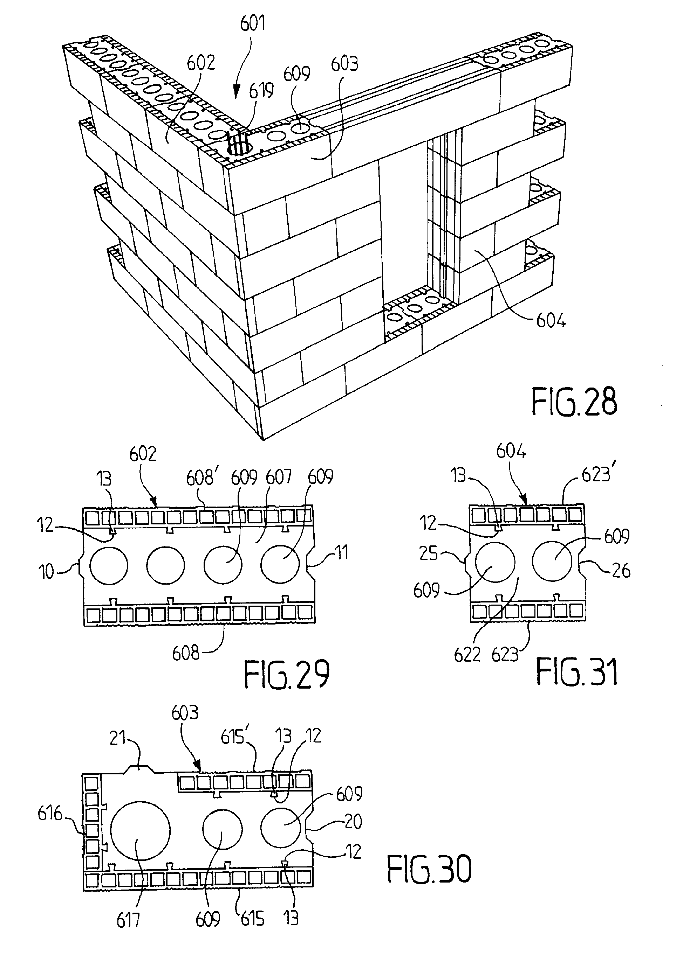

### Mode de réalisation des Figures 28 à 30 et variantes de revêtement intérieur

Ces Figures illustrent un septième mode de réalisation qui diffère du deuxième mode de réalisation par les trous 609 qui sont disposés suivant un alignement.

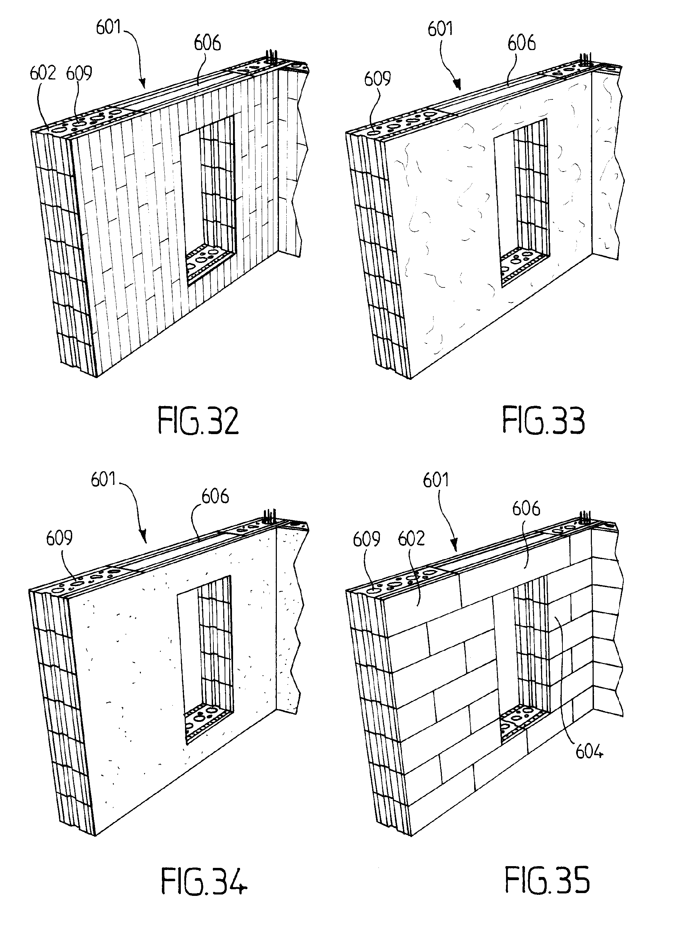

Le revêtement intérieur peut être constitué par des lambris (Figure 32), du béton (Figure 33), du plâtre (Figure 34) ou ne pas être prévu (Figure 35).

Les dimensions des différents blocs 2, 3, 4 et 5 (et des blocs des autres modes de réalisation) peuvent être les suivantes :
- pour le bloc 2 : longueur 400 mm à 800 mm ; largeur 200 mm à 600 mm ; et hauteur 150 mm à 400 mm ;
- pour le bloc 3 : longueur 400 mm à 800 mm ; largeur 200 mm à 600 mm ; et hauteur 150 mm à 400 mm ;
- pour le bloc 4 : longueur 200 mm à 400 mm ; largeur 200 mm à 600 mm ; et hauteur 150 mm à 400 mm ; et
- pour le bloc 5 : longueur 800 mm à 1600 mm ; largeur 200 mm à 600 mm ; et hauteur 150 mm à 400 mm.

La réalisation de la construction s'effectue par montage des niveaux successifs avec application de colle sur les parties structurales et ferraillage au moins aux angles.

Il est bien entendu que les modes de réalisation ci-dessus de la présente invention ont été donnés à titre indicatif et non limitatif et que des modifications pourront y être apportées sans que l'on s'écarte pour autant du cadre de la présente invention.

## Revendications

1. Bloc de construction, **caractérisé par le fait qu'**il se compose d'une partie isolante constituée par un bloc parallélépipédique présentant deux faces opposées supérieure et inférieure et quatre faces latérales opposées deux à deux, et fait de matière inorganique solide thermiquement isolante appelé « bloc isolant » (7, 14, 22, 27) et d'une partie structurale constituée par au moins un bloc de matériau structural appelé « bloc structural » (8, 15, 16, 23, 28-29) solidaire dudit bloc isolant, le ou au moins un bloc structural étant rapporté contre une face latérale dudit bloc isolant, au moins une face latérale dudit bloc isolant perpendiculaire à celle portant le ou un bloc structural étant laissée libre, la liaison entre le matériau structural et la matière inorganique solide s'effectuant par adhésion dudit matériau et de ladite matière.

2. Bloc de construction selon la revendication 1, **caractérisé par le fait que** la matière inorganique solide thermiquement isolante remplit au moins l'une des conditions suivantes :
- elle est poreuse, présentant notamment une porosité comprise entre 55 et 95% en volume, de préférence entre 65 et 85% en volume ;
- elle présente une résistance mécanique à la compression comprise entre 5 et 30 kg/cm², de préférence supérieure à 8 kg/cm², de façon particulièrement préférée supérieure à 12 kg/cm² ; et
- elle présente une conductivité thermique à 25°C inférieure à 130 mW/K.m, de préférence inférieure à 80 mW/K.m.

3. Bloc de construction selon l'une des revendications 1 et 2, **caractérisé par le fait que** la matière inorganique thermiquement isolante comporte une phase cristalline contenant une ou plusieurs phases silico-calcaires de formule CaₓSi_{y}O_{z}(OH)_{i,}jH₂O, où x, y, z, i et j sont des nombres entiers positifs ou nuls, en particulier de formule Ca₆Si₆O₁₇(OH)₂.

4. Bloc de construction selon l'une des revendications 1 à 3, destiné à constituer un bloc de mur ou d'angle, **caractérisé par le fait que** le bloc isolant est un bloc plein.

5. Bloc de construction selon l'une des revendications 1 à 3, destiné à constituer un bloc de mur ou d'angle, **caractérisé par le fait que** le bloc isolant (7, 14, 22) comporte au moins un trou (9, 17, 18, 24) le traversant de la face supérieure à la face inférieure, lesdits trous, lorsqu'ils sont plusieurs, pouvant être de sections identiques ou différentes, le ou au moins un trou pouvant avoir une dimension permettant le passage d'au moins une canalisation électrique et/ou d'au moins une canalisation hydraulique ou le passage d'un ferraillage destiné à être noyé dans le béton, avantageusement pratiqué dans la région d'angle d'un bloc d'angle, la partie ajourée d'un bloc isolant pouvant représenter jusqu'à 85% du volume dudit bloc isolant.

6. Bloc de construction selon l'une des revendications 1 à 5, destiné à constituer un bloc de mur, **caractérisé par le fait que** la partie structurale est constituée par le bloc (8, 108, 408) rapporté contre une face latérale du bloc isolant (7, 107, 407), et le cas échéant par un autre bloc structural (108', 408') rapporté contre la face latérale opposée dudit bloc isolant (7, 107, 407) ou noyé dans ledit bloc isolant (7, 107, 407) au voisinage de la face latérale opposée de ce dernier.

7. Bloc de construction selon la revendication 6, destiné à constituer un bloc de mur, **caractérisé par le fait que** le bloc isolant (7) comporte, sur l'une de ses faces latérales perpendiculaires à celle(s) portant un bloc structural (8), au moins une rainure d'emboîtement (11) s'étendant sur toute sa hauteur et sur la face latérale libre opposée au moins une nervure d'emboîtement (10) s'étendant sur toute sa hauteur.

8. Bloc de construction selon l'une des revendications 1 à 6, destiné à constituer un bloc d'angle, **caractérisé par le fait que** la partie structurale est constituée par le bloc structural ou premier bloc (15, 115, 415), rapporté contre une face latérale du bloc isolant (4, 114, 414), par un second bloc structural (16, 116, 416) rapporté contre une face latérale du bloc isolant (4, 114, 414) perpendiculaire à la précédente, et le cas échéant par un troisième bloc structural (115', 415') rapporté contre, ou noyé dans ce dernier au voisinage de, la face latérale opposée à celle portant le premier bloc structural, le troisième bloc ne s'étendant pas jusqu'au second bloc pour permettre une continuité de la partie isolante aux angles d'une construction.

9. Bloc de construction selon la revendication 8, **caractérisé par le fait que** le bloc isolant (14) comporte au moins une rainure/nervure d'emboîtement (20-21) s'étendant sur toute sa hauteur d'une part sur sa face latérale transversale opposée à celle formant l'angle, et d'autre part sur la partie de la face latérale longitudinale qui est opposée à celle portant le premier bloc structural (15) et qui assure la liaison directe avec la partie isolante principale du bloc de construction de mur qui sera disposé perpendiculairement audit bloc de construction d'angle.

10. Bloc de construction selon l'une des revendications 1 à 3, destiné à constituer un linteau d'ouverture de porte ou fenêtre, **caractérisé par le fait qu'**il présente une longueur correspondant à l'ouverture qu'il est destiné à délimiter en partie supérieure, qu'il comporte un second bloc structural (28) sur la face opposée à celle portant ledit premier bloc structural (29), et le bloc isolant (27) étant évidé à sa surface supérieure, formant un canal en U (30) débouchant dans les faces latérales transversales dudit bloc de construction linteau (5) pour le ferraillage et la coulée de béton.

11. Bloc de construction selon la revendication 10, **caractérisé par le fait que** le bloc isolant principal (27) comporte, sur l'une de ses faces latérales, au moins une rainure d'emboîtement s'étendant sur toute sa hauteur et sur la face opposée au moins une nervure d'emboîtement (33) s'étendant sur toute hauteur.

12. Bloc de construction selon l'une des revendications 1 à 11, **caractérisé par le fait que** le bloc isolant a une résistance à la compression comprise entre 5 et 30 kg/cm² dans sa partie principale.

13. Bloc de construction selon l'une des revendications 1 à 12, **caractérisé en ce que** la face supérieure du bloc isolant est en retrait de la face supérieure du ou des blocs structuraux.

14. Bloc de construction selon l'une des revendications 1 à 13, **caractérisé par le fait qu'**un bloc structural comporte au moins une nervure/rainure (12-13) sur sa ou ses faces appliquées contre un bloc isolant et venue en prise avec une rainure/nervure correspondante pratiquée dans ledit bloc isolant à la manière d'un assemblage de type tenon-mortaise, un tel assemblage étant aussi avantageusement prévu dans le cas d'un bloc structural noyé dans le bloc isolant, de part et d'autre dudit bloc structural.

15. Bloc de construction selon l'une des revendications 1 à 14, **caractérisé par le fait qu'**un bloc structural est constitué d'une brique pleine, ou d'une brique alvéolaire, notamment une brique alvéolaire à perforations verticales ou une brique alvéolaire à perforations horizontales, ou de terre cuite ou de béton banché ou d'un élément de type parpaing.

16. Procédé de fabrication du bloc de construction tel que défini à l'une des revendications 1 à 15, **caractérisé par le fait que**, dans un autoclave résistant à la pression, on place au moins un moule dans lequel on a coulé une bouillie aqueuse de la matière inorganique solide thermiquement isolante et dans lequel on a placé verticalement le ou les blocs structuraux ainsi que le cas échéant un ou des inserts correspondant au trou ou aux trous devant être pratiqués dans le bloc isolant principal, on ferme hermétiquement l'autoclave que l'on place sous pression, on chauffe jusqu'à la température de prise hydrothermale, on ouvre l'autoclave, on retire le ou les moules et l'on démoule le ou les blocs de construction et on les sèche.

17. Ensemble de blocs de construction d'un ouvrage ou bâtiment comprenant des blocs de construction de mur, des blocs de construction d'angle et des blocs de construction linteaux tels que définis à l'une des revendications 1 à 16, les longueurs d'un bloc d'angle et d'un bloc de mur étant avantageusement égales et la largeur d'un bloc d'angle ou de mur étant avantageusement la moitié de sa longueur, les blocs de construction incluant des demi-blocs de mur.

18. Ouvrage ou bâtiment ou partie d'ouvrage ou de bâtiment composé de blocs de construction tels que définis à l'une quelconque des revendications 1 à 16, lesdits blocs de mur et d'angle étant disposés côte à côte pour former des couches horizontales successives solidarisées par collage aux interfaces, les blocs d'une couche étant décalés en quinconce par rapport aux blocs d'une couche immédiatement supérieure ou inférieure, et les blocs d'angle d'une couche étant orientés perpendiculairement aux blocs d'angle d'une couche immédiatement supérieure ou inférieure, des blocs de construction linteaux étant disposés en partie supérieure d'ouvertures prévues dans l'ouvrage ou le bâtiment, du béton ayant été coulé dans les trous en regard comportant du ferraillage, des canalisations électriques ou hydrauliques ayant été passées dans les trous en regard prévus à cet effet, et les trous d'échange thermique étant disposés ou non en regard d'une couche immédiatement supérieure ou inférieure, les faces externes des murs pouvant recevoir un enduit, et les faces internes, un enduit ou un revêtement de bois, lambris, plâtre ou béton.
